# EUROPÄISCHE PATENTSCHRIFT

(11) **EP 4 644 053 B1**
(45) Veröffentlichungstag und Bekanntmachung des Hinweises auf die Patenterteilung: **13.05.2026**
(21) Anmeldenummer: 24173421.9
(22) Anmeldetag: 30.04.2024
(51) Int. Cl.: B25J 9/14, B25J 15/06

(54) **VERFAHREN ZUM HANDHABEN EINES GEGENSTANDS MITTELS EINER GREIFVORRICHTUNG SOWIE HANDHABUNGSVORRICHTUNG ZUM DURCHFÜHREN DES VERFAHRENS**
METHOD FOR HANDLING AN OBJECT BY MEANS OF A GRIPPING DEVICE AND HANDLING DEVICE FOR CARRYING OUT THE METHOD
PROCÉDÉ DE MANIPULATION D'UN OBJET AU MOYEN D'UN DISPOSITIF DE PRÉHENSION ET DISPOSITIF DE MANIPULATION PERMETTANT LA MISE EN UVRE DU PROCÉDÉ

(43) Veröffentlichungstag der Anmeldung: 05.11.2025
(73) Patentinhaber: J. Schmalz GmbH, 72293 Glatten (DE)
(72) Erfinder: Stockburger, Ralf, 72293 Glatten (DE); Schmider, Matthias, 72280 Dornstetten (DE)
(74) Vertreter: DREISS Patentanwälte PartG mbB

(56) Entgegenhaltungen:
- EP-A1- 4 147 831
- DE-A1- 102017 218 877
- DE-U1- 202017 106 859
- IT-A1- 202200 019 074
- US-A1- 2020 189 122

## Beschreibung

Die Erfindung betrifft ein Verfahren zum Handhaben eines Gegenstands mittels einer Greifvorrichtung, welche wenigstens eine an einem Greifergrundkörper gehalterte Greifeinheit aufweist. Die Greifeinheit umfasst einen Hubkolben und einen mit dem Hubkolben bewegungsgekoppelten Greifer, wobei der Hubkolben entlang einer Hubachse zwischen einer axial eingefahrenen Konfiguration und einer axial ausgefahrenen Konfiguration verstellbar ist. Die Erfindung betrifft auch eine Handhabungsvorrichtung umfassend eine solche Greifvorrichtung.

Derartige Greifvorrichtungen sind aus dem Stand der Technik aus DE 20 2017 106859 U1, IT 2022 0001 9074 A1, EP 4147 831 A1, US 2022/189122 A1 und DE 10 2017 218877 A1 bekannt. Zum Greifen eines Gegenstands wird der wenigstens eine Hubkolben aus der eingefahrenen Konfiguration in die ausgefahrene Konfiguration überführt und sodann der mit dem Hubkolben bewegungsgekoppelte Greifer auf den zugreifenden Gegenstand aufgesetzt und der Gegenstand gegriffen. Das Ausfahren des Hubkolbens erfolgt typischerweise durch Beaufschlagen des Hubkolbens mittels Druckluft.

Die Erfindung beschäftigt sich mit der Aufgabe, das Greifen mit einer solchen Greifvorrichtung robust und flexibel auszugestalten. Darüber hinaus ist es wünschenswert, auch Gegenstände mit unregelmäßiger Oberfläche und/oder Form zuverlässig zu greifen.

Diese Aufgabe wird erfindungsgemäß durch ein Verfahren mit den Merkmalen des Anspruchs 1 gelöst. Hierbei handelt es sich um ein Verfahren zum Handhaben eines Gegenstands mittels einer Greifvorrichtung umfassend einen Greifergrundkörper und wenigstens eine an dem Greifergrundkörper gehalterte Greifeinheit, vorzugsweise mehrere Greifeinheiten. Bei dem Verfahren handelt es sich insofern auch um ein Verfahren zum Betreiben einer solchen Greifvorrichtung.

Die Greifeinheit (bei mehreren Greifeinheiten jede Greifeinheit) umfasst einen Hubkolben und einen mit dem Hubkolben bewegungsgekoppelten Greifer, insbesondere Sauggreifer, zum Greifen des Gegenstands. Der Hubkolben ist entlang einer Hubachse zwischen einer axial eingefahrenen Konfiguration und einer axial ausgefahrenen Konfiguration relativ zu dem Greifergrundkörper verstellbar. Der Hubkolben ist in einer Ausfahrrichtung und in einer zu der Ausfahrrichtung entgegengesetzten Einfahrrichtung entlang der Hubachse verstellbar. Die eingefahrene Konfiguration und die ausgefahrene Konfiguration des Hubkolbens bilden insbesondere Endstellungen eines Verschiebewegs des Hubkolbens entlang der Hubachse. Der Hubkolben kann insbesondere in die eingefahrene Konfiguration beaufschlagt, bspw. federbeaufschlagt, sein.

Der Hubkolben ist durch Beaufschlagen mit Druckluft in Ausfahrrichtung ausfahrbar, insbesondere aus der eingefahrenen Konfiguration in die ausgefahrene Konfiguration überführbar.

Gemäß dem Verfahren wird zunächst der Hubkolben der Greifeinheit (bei mehreren Greifeinheiten: der Hubkolben zumindest einer Greifeinheit) mit Druckluft bei einem Ausfahrdruck beaufschlagt, sodass der Hubkolben ausgehend von der eingefahrenen Konfiguration in Ausfahrrichtung ausgefahren wird. Insbesondere kann durch Ausfahren des Hubkolbens der Greifer aktiviert werden.

Sodann wird der mit dem ausgefahrenen Hubkolben bewegungsgekoppelte Greifer auf den zu greifenden Gegenstand aufgesetzt, bspw. mittels eines Manipulators, insbesondere Roboters.

Sodann wird der Gegenstand mit dem Greifer gegriffen. Bei einer Ausgestaltung des Greifers als Sauggreifer kann das Greifen beispielsweise das Ansaugen des Gegenstands umfassen. Das Greifen kann instantan mit dem Aufsetzen erfolgen oder ein Zeitintervall nach dem Aufsetzen umfassen.

Erfindungsgemäß wird der Hubkolben beim Aufsetzen mit Druckluft bei einem Voreinstelldruck beaufschlagt und nach dem Aufsetzen, insbesondere nach dem Greifen, mit Druckluft bei einem Hauptdruck beaufschlagt, wobei der Voreinstelldruck geringer ist als der Hauptdruck. Insofern wird nach dem Aufsetzen, insbesondere nach dem Greifen, ein auf den Hubkolben wirkender Druck erhöht. Durch Beaufschlagen des Hubkolbens mit dem Voreinstelldruck bzw. dem Hauptdruck wird der Hubkolben in Ausfahrrichtung beaufschlagt, insbesondere entgegen einer optionalen Federbeaufschlagung in Einfahrrichtung.

Bei dem vorgeschlagenen Verfahren wird der wenigstens eine Hubkolben insofern beim Aufsetzen mit einem reduzierten Druck beaufschlagt, sodass der Hubkolben beim Aufsetzen zumindest leicht in Einfahrrichtung nachgeben kann ("Einfedern"). Mit anderen Worten wird durch das vorgeschlagene Verfahren ein sanftes Aufsetzen des Greifers auf den Gegenstand begünstigt, was das Risiko von Beschädigungen am Greifer und/oder am Gegenstand reduziert. Darüber hinaus können durch das Einfedern des Hubkolbens mögliche Unebenheiten an der Bauteiloberfläche ausgeglichen werden (höhere Toleranz), was ein zuverlässiges Greifen, insbesondere ein zuverlässiges Abdichten bei einer Ausgestaltung des Greifers als Sauggreifer, begünstigt.

Nach dem Aufsetzen wird der Hubkolben dann durch Beaufschlagen mit dem höheren Hauptdruck in eine stabile Konfiguration (insbesondere Hubkolben in ausgefahrener Konfiguration) überführt, sodass der Gegenstand in definierter Position an der Greifvorrichtung gehalten ist. Dies begünstigt ein zuverlässiges und positionsgenaues Handhaben des Gegenstands.

Eine beispielhafte Realisierungsmöglichkeit der Greifeinheit sieht vor, dass der Hubkolben in einem Greifeinheitengehäuse verschiebbar ist und in dem Greifeinheitengehäuse eine Druckkammer ausgebildet ist, welche mit dem Hubkolben derart fluidisch zusammenwirkt, dass durch Beaufschlagen der Druckkammer mit Druckluft eine in Ausfahrrichtung wirkende Kraft auf den Hubkolben ausgeübt wird. Insbesondere umfasst die Greifvorrichtung dann einen Druckluftanschluss zum Anschluss an eine insbesondere Druckluftversorgungseinrichtung und ein Druckluftverteilersystem zum Leiten der Druckluft zu der wenigstens einen Greifeinheit. Zum Einstellen eines Druckwertes der Druckluft an der Druckkammer kann, insbesondere als Teil der Druckluftversorgungseinrichtung, eine Druckeinstelleinrichtung zum Einstellen eines Drucks der Druckluft vorgesehen sein.

Zusätzlich, insbesondere bei einer Ausgestaltung des Greifers als Sauggreifer, kann die Greifvorrichtung einen Unterdruckanschluss zum Anschluss an eine Unterdruckversorgung und ein Unterdruckverteilersystem zum Leiten von Unterdruck zu der wenigstens einen Greifeinheit aufweisen.

Es ist grundsätzlich auch denkbar, dass es sich bei der Druckkammer um eine Unterdruckkammer handelt. Insofern kann die Druckkammer derart ausgebildet sein, dass der Hubkolben durch Beaufschlagen der Unterdruckkammer mit Unterdruck in Ausfahrrichtung verschiebbar ist.

Es ist denkbar, dass der Hubkolben erst im Moment des Aufsetzens mit dem Voreinstelldruck beaufschlagt wird (und bspw. zuvor mit dem Ausfahrdruck). Vorzugsweise wird der Hubkolben aber bereits vor dem Aufsetzen und dann während des Aufsetzens mit dem Voreinstelldruck beaufschlagt. Dies begünstigt das Greifen von Gegenständen mit unregelmäßig gekrümmter Oberfläche, bei denen ein genauer Aufsetzzeitpunkt nicht oder nur schwierig definierbar ist.

Der Hauptdruck ist vorzugsweise derart gewählt, dass der Hubkolben durch die Beaufschlagung mit dem Hauptdruck in die ausgefahrene Konfiguration überführt wird und/oder in der ausgefahrenen Konfiguration gehalten wird. Mit anderen Worten wird der Hubkolben nach dem Aufsetzen, insbesondere nach dem Greifen, vorzugsweise derart mit Druckluft beaufschlagt, dass der Hubkolben durch die Beaufschlagung mit dem Hauptdruck in die ausgefahrene Konfiguration überführt wird und/oder in der ausgefahrenen Konfiguration gehalten wird. Beispielsweise ist es denkbar, dass die Greifvorrichtung nach dem Greifen zunächst angehoben wird, insbesondere sodass der Hubkolben in Folge einer dann auf ihn wirkenden Gewichtskraft des Gegenstands in die ausgefahrene Konfiguration überführt wird, und danach der Hubkolben mit dem Hauptdruck beaufschlagt wird, insbesondere sodass der Hubkolben in der ausgefahrenen Konfiguration fixiert ist. Es ist auch denkbar, dass sich der Hubkolben bei Beaufschlagung mit dem Voreinstelldruck in einer Zwischenstellung zwischen der eingefahrenen Konfiguration und der ausgefahrenen Konfiguration befindet und dann durch Beaufschlagen des Hubkolbens mit dem Hauptdruck ausgehend von der Zwischenstellung zunächst in die ausgefahrene Konfiguration überführt wird und dann dort, entgegen der optionalen Federbeaufschlagung, gehalten wird.

Als besonders vorteilhaft hat sich herausgestellt, wenn der Voreinstelldruck maximal halb so groß ist wie der Hauptdruck. Insofern ist der Hauptdruck vorzugsweise mindestens doppelt so groß wie der Voreinstelldruck. Auf diese Weise ist ein Einfedern des Hubkolbens erleichtert.

Es ist denkbar, dass der Voreinstelldruck dem Umgebungsdruck entspricht. Beispielsweise kann das Beaufschlagen des Hubkolbens mit dem Voreinstelldruck das Abschalten oder Unterbrechen einer Druckluftversorgung umfassen. Vorzugsweise ist der Voreinstelldruck aber ein Überdruck.

Als besonders vorteilhaft hat sich herausgestellt, wenn der Voreinstelldruck zwischen 0 und 2 bar liegt. Weiter erweist es sich als vorteilhaft, wenn der Hauptdruck zwischen 4 und 6 bar liegt, insbesondere zwischen 4,5 und 5,5 bar. Besonders vorteilhaft ist es, wenn der Voreinstelldruck zwischen 0 und 2 bar liegt und der Hauptdruck zwischen 4 und 6 bar, insbesondere zwischen 4,5 und 5,5 bar, liegt.

Es ist denkbar, dass der Voreinstelldruck derart gewählt, dass der Hubkolben bei freiem Ausfahren (d.h. ohne Kontakt mit einem Gegenstand) in die ausgefahrene Konfiguration überführt wird. Eine solche Ausgestaltung begünstigt ein kontrolliertes Aufsetzen des Greifers, da der Greifer auf diese Weise in einer genau definierten Position (Endstellung des Verschiebewegs entlang der Hubachse) gehalten ist.

Es ist auch denkbar, dass der Voreinstelldruck derart gewählt ist, dass der Hubkolben bei freiem Ausfahren (d.h. ohne Kontakt mit einem Gegenstand) in eine Zwischenstellung (entlang der Hubachse) zwischen der eingefahrenen Konfiguration und der ausgefahrenen Konfiguration überführt wird. Eine solche Ausgestaltung ermöglicht dann beim Aufsetzen des Greifers eine Relativbewegung des Hubkolbens in beide Richtungen (Einfahrrichtung und Ausfahrrichtung).

Im Rahmen einer beispielhaften Realisierungsform ist der Hubkolben in Einfahrrichtung, insbesondere in die eingefahrene Konfiguration, beaufschlagt, insbesondere federbeaufschlagt. Der Voreinstelldruck kann dann derart gewählt sein, dass der Hubkolben bei freiem Ausfahren (d.h. ohne Kontakt mit einem Gegenstand) - entgegen der Federbeaufschlagung - in die ausgefahrene Konfiguration überführt wird oder in eine Zwischenstellung zwischen der eingefahrenen Konfiguration und der ausgefahrenen Konfiguration überführt wird.

Der Ausfahrdruck ist vorzugsweise größer als der Voreinstelldruck. Insbesondere ist der Ausfahrdruck derart gewählt, dass der Hubkolben ausgehend von der eingefahrenen Konfiguration in die ausgefahrene Konfiguration überführt wird. Auf diese Weise kann sichergestellt werden, dass der Hubkolben ausgefahren wird und insbesondere somit der Greifer aktiviert wird. Insbesondere können Ausfahrdruck und Hauptdruck identisch sein.

Im Rahmen einer vorteilhaften Ausgestaltung des Verfahrens kann der Hubkolben insofern zum Ausfahren aus der eingefahrenen Konfiguration zunächst mit einem ersten Druck (Ausfahrdruck) beaufschlagt werden, dieser Druck dann, insbesondere vor dem Aufsetzen auf einen zu greifenden Gegenstand, auf einen zweiten Druck (Voreinstelldruck) reduziert werden, bei dem reduzierten zweiten Druck (Voreinstelldruck) der Greifer auf den Gegenstand aufgesetzt werden und nach dem Aufsetzen, insbesondere nach dem Greifern, weiter insbesondere nach einem Anheben des Gegenstands, der Druck wieder erhöht werden auf einen dritten Druck (Hauptdruck, insbesondere gleich Ausfahrdruck).

Bei alternativen Ausgestaltungen kann der Ausfahrdruck aber auch dem Voreinstelldruck entsprechen. Insofern kann das Beaufschlagen des Hubkolbens zum (initialen) Ausfahren aus der eingefahrenen Konfiguration und das Beaufschlagen des Hubkolbens beim Aufsetzen mit dem gleichen Druck erfolgen.

Wie vorstehend erwähnt, ermöglicht das Beaufschlagen des Hubkolbens mit dem reduzierten Voreinstelldruck ein Einfedern des Hubkolbens in Einfahrrichtung. Vorzugsweise erfolgt das Aufsetzen des Greifers auf den zu greifenden Gegenstand derart, dass der Hubkolben (aktiv) - entgegen der Beaufschlagung durch den Voreinstelldruck - in Einfahrrichtung verlagert wird. Auf diese Weise kann ein zuverlässiges Greifen, insbesondere Abdichten, realisiert werden.

Im Rahmen einer vorteilhaften Weiterbildung kann außerdem eine Sensoreinrichtung zum Überwachen eines Greifzustands des Greifers vorgesehen sein, insbesondere als Teil der Greifvorrichtung. Dann ist es möglich, dass mittels der Sensoreinrichtung ein Greifzustand des Greifers überwacht wird und in Abhängigkeit eines Ausgangssignals der Sensoreinrichtung der auf den Hubkolben wirkende Druck verändert wird, insbesondere bei Detektion eines Greifens eines Gegenstands durch den Greifer der auf den Hubkolben wirkende Druck von dem Voreinstelldruck auf den Hauptdruck erhöht wird.

Im Rahmen einer besonders vorteilhaften Ausgestaltung ist der Greifer der wenigstens einen Greifeinheit als Sauggreifer zum Ansaugen eines Gegenstands mittels Unterdrucks ausgebildet. Der Saugkörper begrenzt insbesondere einen durch eine Saugöffnung offenen Saugraum.

Bei einer solchen Ausgestaltung mit Sauggreifer kann außerdem eine Sensoreinrichtung zum Überwachen eines in dem Saugraum vorherrschenden Unterdrucks vorgesehen sein, insbesondere als Teil der Greifvorrichtung. Dann ist es möglich, dass während des Aufsetzens der in dem Saugraum vorherrschende Unterdruck mittels der Sensoreinrichtung überwacht wird und bei Detektion eines, einen vorgegebenen oder vorgebbaren Druck-Schwellwert über- oder unterschreiten, Druckes in dem Saugraum der auf den Hubkolben wirkende Druck von dem Voreinstelldruck auf den Hauptdruck erhöht wird. Die Sensoreinrichtung kann beispielsweise einen Drucksensor umfassen. Die Sensoreinrichtung kann über eine Steuereinrichtung mit der oben erwähnten Druckeinstelleinrichtung zum Einstellen eines Druckes der Druckluft zusammenwirken. Der Druck-Schwellwert kann bspw. in einer Speichereinrichtung einer Steuereinrichtung hinterlegt sein.

Die vorstehend genannte Aufgabe wird auch durch eine Handhabungsvorrichtung mit den Merkmalen des Anspruchs 11 gelöst. Hierbei handelt es sich um eine Handhabungsvorrichtung zum Handhaben eines Gegenstands. Die Handhabungsvorrichtung ist insbesondere zum Ausführen eines der vorstehend beschriebenen Verfahren ausgebildet.

Die Handhabungsanlage umfasst eine Greifvorrichtung, umfassend einen Greifergrundkörper und wenigstens eine an dem Greifergrundkörper gehalterte Greifeinheit. Die Greifeinheit (bei mehreren Greifeinheiten jede Greifeinheit) umfasst einen Hubkolben und einen mit dem Hubkolben bewegungsgekoppelten Greifer, insbesondere Sauggreifer, zum Greifen des Gegenstands, wobei der Hubkolben entlang einer Hubachse zwischen einer axial eingefahrenen Konfiguration und einer axial ausgefahrenen Konfiguration in einer Ausfahrrichtung und in einer zu der Ausfahrrichtung entgegengesetzten Einfahrrichtung relativ zu dem Greifergrundkörper verstellbar ist.

Die Greifeinheit weist ein Greifeinheitengehäuse auf, in welchem der Hubkolben verschiebbar ist. Das Greifeinheitengehäuses kann zumindest abschnittsweise durch den Greifergrundkörper gebildet sein. Das Greifeinheitengehäuse kann von dem Greifergrundkörper separat bereitgestellt sein und an dem Greifergrundkörper befestigt sein. In dem Greifeinheitengehäuse ist eine Druckkammer, insbesondere Druckluftkammer, ausgebildet, welche mit dem Hubkolben derart fluidisch zusammenwirkt, dass durch Beaufschlagen der Druckkammer mit Druckluft eine in Ausfahrrichtung wirkende Kraft auf den Hubkolben ausgeübt wird. Die Druckkammer kann durch einen Abschnitt eines Gehäuseinnenraums des Greifeinheitengehäuses gebildet sein.

Die Handhabungsvorrichtung umfasst außerdem eine Druckluftversorgungseinrichtung zur Versorgung der Druckkammer mit Druckluft. Die Druckluftversorgungseinrichtung kann eine von der Greifvorrichtung separat bereitgestellte Druckluftversorgung (bspw. umfassend eine Kompressoreinrichtung) zum Bereitstellen von Druckluft an der Greifvorrichtung umfassen.

Insbesondere umfasst die Greifvorrichtung einen Druckluftanschluss zum Anschluss an eine solche Druckluftversorgung und ein, insbesondere in den Greifergrundkörper integriertes, Druckluftverteilersystem zum Leiten der Druckluft zu der wenigstens einen Greifeinheit. Im Rahmen einer vorteilhaften Weiterbildung kann die Greifvorrichtung, insbesondere als Teil des Druckluftverteilersystems, eine Ventileinrichtung aufweisen, welche dazu ausgebildet ist, eine Druckluftversorgung der Hubkolben, insbesondere voneinander unabhängig, zu steuern, insbesondere eine jeweilige Strömungsverbindung zwischen den Hubkolben und dem Druckluftanschluss bedarfsweise abzusperren oder freizugeben. Die Ventileinrichtung kann insbesondere für jede Greifeinheit ein eigenes Druckluftventil aufweisen. Die Ventileinrichtung kann insbesondere im Greifergrundkörper angeordnet sein.

Die Handhabungsvorrichtung umfasst außerdem, insbesondere als Teil der Druckluftversorgungseinrichtung, eine Druckeinstelleinrichtung zum Einstellen eines Druckes der Druckluft. Die Druckeinstelleinrichtung ist insbesondere dazu ausgebildet, einen an der Druckkammer, insbesondere an dem Druckanschluss der Greifvorrichtung, anliegenden Versorgungsdruck der Druckluft einzustellen. Die Druckeinstelleinrichtung kann beispielsweise dazu ausgebildet, einen von einer externen Druckluftversorgung bereitgestellten Druck zu regulieren, insbesondere zu mindern. Eine solche Druckeinstelleinrichtung kann beispielsweise durch ein verstellbares Ventil realisiert sein. Die Druckeinstelleinrichtung kann Teil der Greifvorrichtung sein. Dann kann die Druckeinstelleinrichtung insbesondere stromabwärts des Druckluftanschlusses angeordnet sein. Vorzugsweise ist die Druckeinstelleinrichtung aber stromaufwärts des Druckluftanschlusses vorgesehen, bspw. als Teil der Druckluftversorgung.

Die Handhabungsvorrichtung kann außerdem einen Manipulator zum Verlagern der Greifvorrichtung umfassen. Der Manipulator kann insbesondere als Roboter ausgebildet sein.

Die Handhabungsvorrichtung umfasst außerdem eine Steuereinrichtung zum Ansteuern der Handhabungsvorrichtung, insbesondere der Druckeinstelleinrichtung und des optionalen Manipulators. Die Steuereinrichtung kann eine oder mehrere Sub-Steuereinrichtung, bspw. eine Steuereinrichtung der Greifvorrichtung und eine Steuereinrichtung des Manipulators umfassen.

Die Steuereinrichtung ist dazu eingerichtet, eines der vorstehend beschriebenen Verfahren durchzuführen. Insbesondere umfasst die Steuereinrichtung dazu ausgebildet, in Abhängigkeit eines Greifzustands des Greifers die Druckeinstelleinrichtung anzusteuern. Vorzugsweise umfasst die Steuereinrichtung eine nichtflüchtige Speichereinrichtung, auf der Steueranweisungen hinterlegt sind, die die Steuereinrichtung, bspw. bei Ausführung auf einer Datenverarbeitungseinrichtung der Steuereinrichtung, dazu veranlassen, eines der vorstehend beschriebenen Verfahren durchzuführen.

Insbesondere ist die Steuereinrichtung dazu eingerichtet, zum Greifen eines Gegenstands die Druckeinstelleinrichtung zunächst derart anzusteuern, dass der wenigstens eine Hubkolben mit einem Ausfahrdruck beaufschlagt wird, sodass der Hubkolben ausgehend von der eingefahrenen Konfiguration in Ausfahrrichtung ausgefahren wird, währenddessen oder danach den optionalen Manipulator derart anzusteuern, dass dieser die Greifvorrichtung mit dem Greifer, welcher mit dem ausgefahrenen Hubkolben bewegungsgekoppelt ist, auf den zu greifenden Gegenstand aufsetzt, wobei die Steuereinrichtung dazu eingerichtet ist, die Druckeinstelleinrichtung derart anzusteuern, dass der Hubkolben beim Aufsetzen des Greifers mit einem Voreinstelldruck beaufschlagt wird und nach dem Aufsetzen, insbesondere nach dem Greifen, mit einem Hauptdruck beaufschlagt wird, wobei der Voreinstelldruck geringer ist als der Hauptdruck. Die Steuereinrichtung ist optional außerdem dazu eingerichtet, nach dem Aufsetzen den Greifer zu aktivieren, sodass dieser den Gegenstand greift. Vorzugsweise wird aber bereits durch das Ausfahren des Hubkolbens aus der eingefahrenen Konfiguration der Greifer aktiviert.

Im Rahmen einer vorteilhaften Weiterbildung ist der Greifer als Sauggreifer ausgebildet, mit einem Saugkörper, welcher einen durch eine Saugöffnung offenen Saugraum begrenzt.

Dann kann es vorteilhaft sein, wenn die Handhabungsvorrichtung außerdem eine mit der Steuereinrichtung zusammenwirkende Sensoreinrichtung, insbesondere umfassend wenigstens einen Drucksensor, zum Überwachen eines in dem Saugraum vorherrschenden Unterdrucks umfasst. Die Sensoreinrichtung kann insbesondere als Teil der Greifvorrichtung vorgesehen sein.

In vorteilhafter Weise kann dann die Steuereinrichtung dazu eingerichtet sein, die Sensoreinrichtung derart anzusteuern, dass diese während des Aufsetzens des Sauggreifers auf den zu greifenden Gegenstand den in dem Saugraum vorherrschenden Unterdruck überwacht.

Die Steuereinrichtung kann insbesondere dazu eingerichtet sein, bei Detektion eines, einen vorgegebenen Druck-Schwellwert unter- oder überschreitenden, Druckes in dem Saugraum, die Druckeinstelleinrichtung derart anzusteuern, dass diese den auf die Druckkammer und somit auf den Hubkolben wirkenden Druck von dem Voreinstelldruck auf den Hauptdruck erhöht.

Die vorstehend im Zusammenhang mit dem Verfahren beschriebenen Vorteile und optionalen Merkmale können auch zur Ausgestaltung der Handhabungsvorrichtung dienen, sodass zur Vermeidung von Wiederholungen auf vorstehende Offenbarung hierzu verwiesen wird.

Nachfolgend werden weitere vorteilhafte Weiterbildungen der Greifvorrichtung beschrieben, welche sowohl zur Ausgestaltung des Verfahrens als auch zur Ausgestaltung der Handhabungsvorrichtung dienen können.

Der Greifer kann grundsätzlich verschieden ausgebildet sein. Im Rahmen einer vorteilhaften Ausgestaltung kann der Greifer eine Passivkonfiguration einnehmen, in welcher keine Greifkraft auf einen Gegenstand ausgeübt wird, und eine Aktivkonfiguration, in welcher eine Greifkraft auf den Gegenstand ausgeübt wird. Insofern kann der Greifer bedarfsweise aktivierbar und wieder deaktivierbar sein. Besonders vorteilhaft ist es, wenn die Greifeinheit derart ausgebildet ist, dass sich der Greifer in der eingefahrenen Konfiguration des Hubkolbens in der Passivkonfiguration befindet und durch Ausfahren des Hubkolbens aus der eingefahrenen Konfiguration in die ausgefahrene Konfiguration in die Aktivkonfiguration überführt wird. Insofern kann durch Ausfahren des Hubkolbens der Greifer aktiviert und somit eine Greifkraft bereitgestellt werden, was eine Steuerung und Aufbau der Greifvorrichtung vereinfacht.

Wie vorstehend erwähnt, ist es besonders bevorzugt, wenn der Greifer wenigstens einer Greifeinheit als Sauggreifer zum Ansaugen eines zu greifenden Gegenstands ausgebildet ist. Insofern kann es sich bei wenigstens einer Greifeinheit um eine Sauggreifeinheit handeln. Vorzugsweise ist der Sauggreifer durch den Hubkolben hindurch mit Unterdruck beaufschlagbar. Insbesondere kann die Greifeinheit derart ausgebildet sein, dass in der ausgefahrenen Konfiguration des Hubkolbens der Sauggreifer mit Unterdruck versorgt wird und insbesondere in der eingefahrenen Konfiguration eine Unterdruckversorgung des Sauggreifers unterbrochen ist.

Der Sauggreifer kann verschieden ausgebildet sein. Insbesondere kann der Sauggreifer eine oder mehrere Saugstellen zum Ansaugen des Gegenstands aufweisen. Beispielsweise ist es denkbar, dass der Sauggreifer als Elastomersauger umfassend wenigstens einen Saugkörper ausgebildet ist. Der Saugkörper kann auf den Hubkolben aufgesteckt oder aufgeschraubt sein. Bei Ausgestaltungen mit mehreren Greifeinheiten ist es denkbar, dass unterschiedliche Greifeinheiten unterschiedliche Sauggreifer, insbesondere unterschiedlich große Saugkörper, aufweisen oder eine unterschiedliche Anzahl an Saugkörpern aufweisen. Durch die Unterschiede der Sauggreifer kann ein Dämpfungsverhalten (weich/hart) beim Aufsetzen beeinflusst, insbesondere dadurch eingestellt, werden.

Bei Ausgestaltungen mit Sauggreifer umfasst die Greifvorrichtung, insbesondere an dem Greifergrundkörper, vorzugsweise einen Unterdruckanschluss zum Anschluss an eine insbesondere externe Unterdruckversorgungseinrichtung. Insbesondere umfasst die Greifvorrichtung dann auch ein, vorzugsweise in den Greifergrundkörper integriertes, Unterdruckverteilersystem zum Verteilen von Unterdruck auf die wenigstens eine Greifeinheit. Die Handhabungsvorrichtung kann die Unterdruckversorgungseinrichtung umfassen. Die Unterdruckversorgungseinrichtung kann eine Unterdruckerzeugungseinrichtung zum Erzeugen und Bereitstellen von Unterdruck aufweisen.

Die Greifeinheit kann vorzugsweise derart ausgebildet sein, dass in der ausgefahrenen Konfiguration des Hubkolbens eine Strömungsverbindung zwischen dem Unterdruckanschluss und dem Sauggreifer hergestellt ist und in der eingefahrenen Konfiguration des Hubkolbens diese Strömungsverbindung abgesperrt ist. Beispielsweise kann eine Absperreinrichtung zum Absperren und Freigeben des Strömungswegs zwischen Unterdruckanschluss und Sauggreifer vorgesehen sein, welche in der eingefahrenen Konfiguration des Hubkolbens eine Sperrstellung einnimmt und durch Ausfahren des Hubkolbens in die ausgefahrene Konfiguration in eine Freigabestellung überführt wird. Insofern kann durch Ausfahren des Hubkolbens der Sauggreifer aktiviert werden. Vorzugsweise sind bei mehreren Greifeinheiten die Strömungsquerschnitte so ausgelegt, dass ein Systemvakuum nicht zusammenbricht wenn einzelne Sauggreifer nicht belegt oder undicht sind.

Wie vorstehend erwähnt, kann die Greifvorrichtung eine Ventileinrichtung aufweisen, welche dazu ausgebildet ist, eine Druckluftversorgung der Hubkolben, insbesondere voneinander unabhängig, zu steuern. In diesem Zusammenhang kann es weiter vorteilhaft sein, wenn die Greifvorrichtung eine Greifer-Steuereinrichtung, insbesondere Steuerplatine, aufweist, welche dazu ausgebildet ist, die Ventileinrichtung anzusteuern. Die Greifvorrichtung kann insofern eine eigene, insbesondere autarke, Steuerung aufweisen. Die Greifer-Steuereinrichtung kann Teil der vorstehend erwähnten Steuereinrichtung der Handhabungsvorrichtung sein. Die Ventileinrichtung und/oder die Greifer-Steuereinrichtung können in oder an dem Greifergrundkörper angeordnet sein.

Die Greifeinheiten können derart ausgebildet sein, dass die Hubkolben in die eingefahrene Konfiguration beaufschlagt, insbesondere federbeaufschlagt, sind. Insbesondere können die Greifeinheiten derart ausgebildet sein, dass sie, bspw. durch die vorstehend beschriebene Federbeaufschlagung, bei Wegnahme der Druckbeaufschlagung automatisch in die eingefahrene Konfiguration überführt werden. Insofern können die Greifeinheiten in einer Ausgangskonfiguration sich in der eingefahrenen Konfiguration befinden.

Bei Ausgestaltungen mit mehreren Greifeinheiten sind diese vorzugswiese derart an dem Greifergrundkörper angeordnet, dass die Hubachsen der Greifeinheiten zueinander parallel verlaufen. Auf diese Weise ist eine besonders kompakte Anordnung geschaffen, welche sich besonders für das Greifen von flächenhaft erstreckten Bauteilen wie Blechen eignet. Darüber hinaus begünstigt eine solche Anordnung eine flexible, modulare Bauweise.

Der Greifergrundkörper kann ein- oder mehrteilig ausgebildet sein. Der Greifergrundkörper kann einen Befestigungsabschnitt zur Befestigung an einem Träger, bspw. einer Flanschplatte eines Manipulators, aufweisen.

Weiter kann es vorteilhaft sein, wenn zwischen einem dem Greifer gegenüberliegenden Ende des Hubkolbens und einer Gehäuseinnenwandung des Greifeinheitengehäuses eine Druckkammer, insbesondere Unterdruckkammer, ausgebildet ist, sodass in der ausgefahrenen (Aktiv-)Konfiguration ein Luftpolster hinter dem Hubkolben bereitgestellt ist, welches einen Kollisionsschutz beim Aufsetzen des Greifers auf einen Gegenstand bildet. Auf diese Weise können sowohl Gegenstand als auch Sauggreifer weiter geschont werden.

Die Hubkolben können verdrehsicher um die Hubachse gehaltert sein. Beispielsweise ist es denkbar, dass eine Verdrehsicherung der Hubkolben über miteinander zusammenwirkende Kreissegmente realisiert ist. Eine solche Verdrehsicherung ist somit nicht klemmend.

Die Greifvorrichtung kann außerdem wenigstens einen Sensor zur Abstandsüberwachung oder Kollisionswarnung vorgesehen sein. Die Sensoren können mit der optionalen Steuereinrichtung verbunden sein und von dieser ansteuerbar sein.

Im Rahmen einer vorteilhaften Weiterbildung können mehrere der vorstehend beschriebenen Greifvorrichtungen zu einem übergeordneten Greifmodul zusammengefasst sein. Die Handhabungsvorrichtung kann insofern ein Greifmodul umfassend mehrere Greifvorrichtungen umfassen. Die Greifvorrichtungen sind vorzugsweise nebeneinander angeordnet und miteinander verbunden. Beispielsweise ist es denkbar, dass die Greifergrundkörper der Greifvorrichtungen miteinander verblockt sind. Die Greifvorrichtungen können voneinander unabhängig ansteuerbar sein. Die Greifvorrichtungen des Greifmoduls können elektrisch miteinander verbunden sein.

Die Erfindung wird im Folgenden anhand der Figuren näher erläutert. Es zeigen:
Fig. 1 skizzierte Darstellung einer beispielhaften Ausgestaltung einer Greifvorrichtung;
Fig. 2A,B Schnittansichten der Greifvorrichtung gemäß Figur 1 zur Erläuterung einer Funktionsweise, mit Hubkolben in eingefahrener Passivkonfiguration (Ansicht A) und in ausgefahrener Aktivkonfiguration (Ansicht B); und
Fig. 3 vereinfachte schematische Darstellungen zur Erläuterung eines beispielhaften Verfahrens zum Greifen eines Gegenstands mit einer Greifvorrichtung gemäß Figur 1.

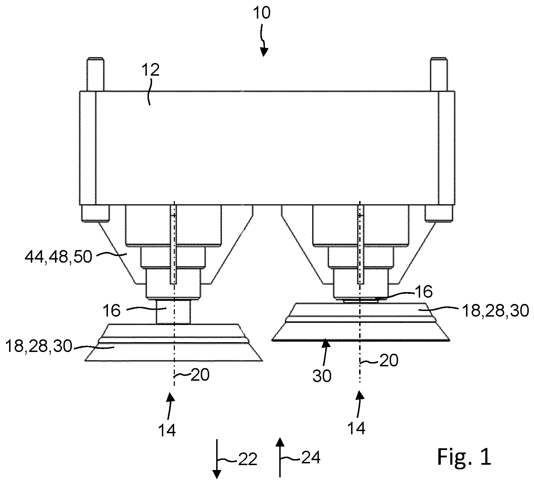

Die Figur 1 zeigt eine beispielhafte Ausgestaltung einer Greifvorrichtung, welche insgesamt mit dem Bezugszeichen 10 bezeichnet ist.

Die Greifvorrichtung 10 umfasst einen Greifergrundkörper 12 und wenigstens eine, im Beispiel zwei, daran angeordnete Greifeinheiten 14. Bei nicht dargestellten Ausgestaltungen können auch mehr oder weniger Greifeinheiten 14 vorgesehen sein.

Die Greifvorrichtung 10 kann insbesondere Teil einer übergeordneten Handhabungsvorrichtung sein. Die Handhabungsvorrichtung kann beispielsweise in grundsätzlich bekannter Art und Weise einen Manipulator, bspw. Roboter, zum Verlagern der Greifvorrichtung 10 aufweisen. Die Handhabungsvorrichtung umfasst vorzugsweise auch eine Steuereinrichtung zum Ansteuern der Handhabungsvorrichtung.

Jede Greifeinheit 14 umfasst einen Hubkolben 16 und einen mit dem Hubkolben 16 bewegungsgekoppelten Greifer 18.

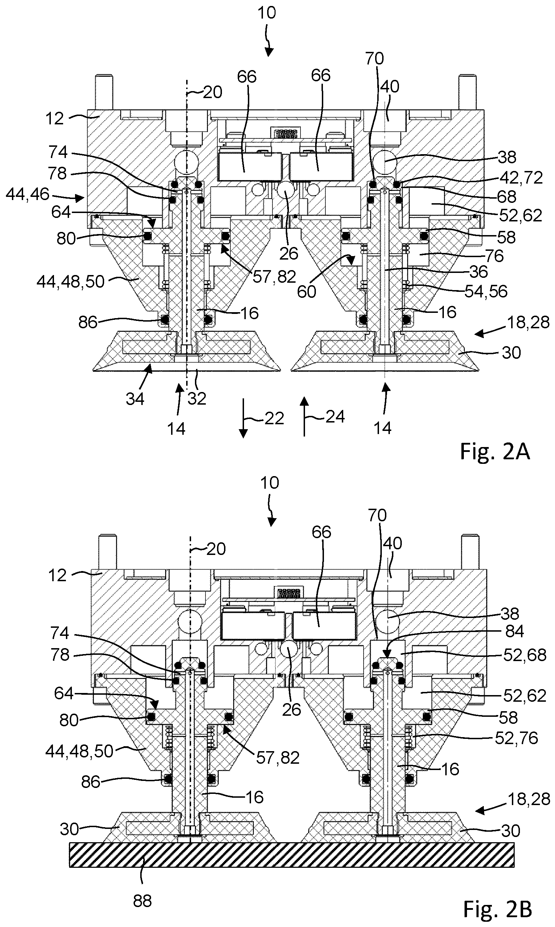

Der Hubkolben 16 einer jeweiligen Greifeinheit 14 ist entlang einer Hubachse 20 zwischen einer axial eingefahrenen Konfiguration (vgl. Figur 2A) und einer axial ausgefahrenen Konfiguration (vgl. Figur 2B) verlagerbar. Insbesondere ist der Hubkolben 16 in einer Ausfahrrichtung 22 und in einer zu der Ausfahrrichtung 22 entgegengesetzten Einfahrrichtung 24 entlang der Hubachse 20 verstellbar.

Die Greifeinheiten 14 sind dabei beispielhaft und bevorzugt derart nebeneinander an dem Greifergrundkörper 12 angeordnet, dass die Hubachsen 20 der Hubkolben 16 zueinander parallel verlaufen.

Wie nachfolgend noch im Detail erläutert, ist der Hubkolben 16 einer jeweiligen Greifeinheit 14 durch Beaufschlagen mittels Druckluft aus der eingefahrenen Konfiguration in die ausgefahrene Konfiguration überführbar (nachfolgend noch im Detail beschrieben). Zu diesem Zweck umfasst die Greifvorrichtung 10 außerdem einen Druckluftanschluss (nicht sichtbar) zum Anschluss an eine externe Druckluftversorgung und ein, insbesondere in den Greifergrundkörper 12 integriertes, Druckluftverteilersystem 26 zum Verteilen der Druckluft von dem Druckluftanschluss auf die Greifeinheiten 14 (vgl. Figuren 2A und 2B).

Die Druckluftversorgung ist insbesondere Teil der vorstehend erwähnten Handhabungsvorrichtung und kann bspw. Kompressoren umfassen. Wie vorstehend erwähnt, ist vorzugsweise außerdem eine Druckeinstelleinrichtung, bspw. in Form eines Steuerventils, vorgesehen, um einen an dem Druckluftanschluss anliegenden Druck der Druckluft einzustellen.

Im dargestellten Beispiel sind die Greifer 18 als Sauggreifer 28 ausgebildet. Insofern handelt es sich bei der Greifvorrichtung 10 um eine Sauggreifvorrichtung. Bei nicht dargestellten Ausgestaltungen ist es aber auch denkbar, dass die Greifer 18 andere Greifmechanismen umfassen.

Im Beispiel gemäß Figur 1 sind die Sauggreifer 28 jeweils durch einen Saugkörper 30, insbesondere Elastomersaugkörper, gebildet, welcher einen durch eine Saugöffnung 32 offenen Saugraum 34 begrenzt (vgl. Fig. 2A).

In der beispielhaften Konfiguration gemäß Figur 1 sind die Sauggreifer 28 (Saugkörper 30) zueinander identisch ausgebildet. Bei nicht dargestellten Ausgestaltungen können Art und Größe der Sauggreifer 28 aber auch variieren. Beispielsweise ist es denkbar, dass an unterschiedlichen Greifeinheiten 14 Saugkörper 28 unterschiedlicher Größe vorgesehen sind.

Wie nachfolgend noch im Detail erläutert, sind die Sauggreifer 28 über einen im jeweiligen Hubkolben 16 ausgebildeten Unterdruckkanal 36 mit Unterdruck versorgbar.

Dabei ist der Unterdruckkanal 36 über ein Unterdruckverteilersystem 38 mit einem Unterdruckanschluss 40 der Greifvorrichtung 10 mit Unterdruck versorgbar. Beispielhaft ist für jede Greifeinheit 14 ein eigener Unterdruckanschluss 40 und ein eigenes Unterdruckverteilersystem 38 vorgesehen. Es ist aber auch möglich, dass die Greifeinheiten 14 über einen gemeinsamen Unterdruckanschluss 40 und ein gemeinsames Unterdruckverteilersystem 38 mit Unterdruck versorgt werden.

Eine Unterdruckversorgung des Unterdruckkanals 36 und somit eine Unterdruckversorgung des Sauggreifers 28 wird im Beispiel über eine optionale Absperreinrichtung 42 (nachfolgend im Detail beschrieben) derart gesteuert, dass in der eingefahrenen Konfiguration des Hubkolbens 16 ein Strömungsweg zwischen Unterdruckkanal 36 und Unterdruckanschluss 40 und somit zwischen Sauggreifer 28 und Unterdruckanschluss 40 abgesperrt ist (Passivkonfiguration) und in der ausgefahrenen Konfiguration des Hubkolbens 16 dieser Strömungsweg freigegeben ist (Aktivkonfiguration).

Eine beispielhafte Konfiguration der Greifeinheiten 14, insbesondere eine Funktionsweise der Hubkolben 16, wird nachfolgend unter Bezugnahme auf die Figuren 2A und 2B erläutert.

Wie aus Figur 2A ersichtlich, sind die Hubkolben 16 in einem jeweiligen Greifeinheitengehäuse 44 entlang der Hubachse 20 verschiebbar geführt. Das Greifeinheitengehäuse 44 ist im Beispiel mehrteilig ausgebildet und umfasst einen ersten oberen Abschnitt 46, welcher durch den Greifergrundkörper 12 gebildet ist, und einen zweiten, unteren Abschnitt 48, welcher durch einen mit dem Greifergrundkörper 12 verbundenen Aufsatz 50 bereitgestellt ist. Bei nicht dargestellten Ausgestaltungen kann das Greifeinheitengehäuse 44 aber auch einteilig ausgebildet sein und an dem Greifergrundkörper 12 gehaltert sein.

Das Greifeinheitengehäuse 44 begrenzt einen Gehäuseinnenraum 52, in welchem der Hubkolben 16 entlang der Hubachse 20 verlagerbar geführt ist.

Im Beispiel ist der Hubkolben 16 mittels einer optionalen Federeinrichtung 54 in die eingefahrene Konfiguration beaufschlagt. Die Federeinrichtung 54 umfasst eine Druckfeder 56. Die Druckfeder 56 stützt sich mit einem ersten Ende an einer Gehäuseinnenwandung des Greifeinheitengehäuses 44 (im Beispiel an einer Gehäuseinnenwandung des unteren Abschnitts 48 / Aufsatzes 50) und mit dem zweiten Ende an einer in Ausfahrrichtung 22 orientierten Stirnseite 57 einer radialen Auskragung 58 des Hubkolbens 16 ab (in den Figuren ist der Übersichtlichkeit halber lediglich ein Teilabschnitt der Feder 56 gezeigt).

Die Stirnseite 57 der radialen Auskragung 58 dient zudem als Anschlag, um - bei Anlage an einem Absatz 60 der Gehäuseinnenwandung des Greifeinheitengehäuses 44 - eine Verschiebebewegung des Hubkolbens 16 in Ausfahrrichtung zu begrenzen. Die radiale Auskragung 58 definiert insofern die ausgefahrene Konfiguration (Endstellung).

Um den Hubkolben 16 aus der eingefahrenen Konfiguration - entgegen der Federbeaufschlagung durch die Federeinrichtung 54 - in Ausfahrrichtung 22 auszufahren, ist in dem Gehäuseinnenraum 52 eine Druckkammer 62 ausgebildet, durch Beaufschlagen derer mit Druckluft eine in Ausfahrrichtung 22 wirkende Kraft auf den Hubkolben 16 ausgeübt wird. Im Konkreten Beispiel begrenzt der Hubkolben 16 die Druckkammer 62 mit einer in Einfahrrichtung 24 orientierten Stirnseite 64 der radialen Auskragung 58. Insofern wirkt ein in der Druckkammer 62 vorherrschender Überdruck auf die radiale Auskragung 58.

Die Druckkammer 62 ist über das vorstehend erwähnte Druckluftverteilersystem 26 mit Druckluft versorgbar.

Zur Steuerung einer Druckluftversorgung der Druckkammer 62 und somit einer Verlagerung des Hubkolbens 16 in Ausfahrrichtung 22 weist die Greifvorrichtung 10 außerdem eine Ventileinrichtung 66 auf, mittels welcher eine Strömungsverbindung zwischen dem Druckluftanschluss und der Druckkammer 62 wahlweise abgesperrt oder freigegeben werden kann. Insbesondere ist für jede Greifeinheit eine eigene Ventileinrichtung, insbesondere ein eigenes Druckluftventil vorgesehen.

Die Figur 2B zeigt dabei eine Konfiguration, in welcher die Druckkammer 62 und somit der Hubkolben 16 mit einem Druck beaufschlagt ist, sodass der Hubkolben 16 ausgehend von der in Figur 2A gezeigten eingefahrenen Konfiguration in die ausgefahrene Konfiguration überführt ist.

Die Greifvorrichtung 10 kann optional außerdem eine integrierte Steuereinrichtung (nicht dargestellt) zum Ansteuern der Ventileinrichtung 66 aufweisen.

Wie vorstehend erwähnt, weist der Hubkolben 16 einen innenliegenden Unterdruckkanal 36 auf, über welchen der Sauggreifer 28 mit Unterdruck versorgbar ist.

Die Versorgung des Unterdruckkanals 36 mit Unterdruck erfolgt im Beispiel über eine im Gehäuseinnenraum 52 ausgebildete erste Unterdruckkammer 68. Die Unterdruckkammer 68 ist wiederum über eine Kammeröffnung 70 mit dem vorstehend erwähnten Unterdruckverteilersystem 38 verbunden.

Wie aus Figur 2A ersichtlich, ist die Kammeröffnung 70 in der axial eingefahrenen Konfiguration (Passivkonfiguration) durch eine am Hubkolben 16 angeordnete erste Dichteinrichtung 72 abgedichtet, sodass eine Unterdruckversorgung der ersten Unterdruckkammer 68 und somit des Unterdruckkanals 36 und somit des Sauggreifers 28 abgesperrt ist. Durch Verlagern des Hubkolbens 16 in Ausfahrrichtung 22 wird die erste Dichteinrichtung 72 von der Kammeröffnung 70 abgehoben, sodass Unterdruck über das Unterdruckverteilersystem 38 in die erste Unterdruckkammer 68 und von dort über einen radialen Zufuhrkanal 74 in den Unterdruckkanal 36 einströmen kann. In der ausgefahrenen Konfiguration nimmt der Sauggreifer 28 dann eine Aktivkonfiguration ein, in welcher der Sauggreifer 28 mit Unterdruck versorgt ist und somit einen Gegenstand ansaugen kann.

Insofern wird durch Beaufschlagen der Überdruckkammer 62 einerseits ein Ausfahren des Hubkolbens 16 in Ausfahrrichtung 22 bewirkt und gleichzeitig eine Unterdruckversorgung des Sauggreifers 28 geöffnet. Durch die Ventileinrichtung 66 werden insofern zwei Funktionen gesteuert.

Die in den Figuren 2A und 2B gezeigte Greifeinheiten 14 sind optional derart ausgebildet, dass bei Öffnen der Kammeröffnung 70 - in Folge des Unterdrucks - eine in Ausfahrrichtung 22 wirkende Kraft auf den Hubkolben 16 ausgeübt wird. Diese nachfolgend näher beschriebene Selbsthaltungsfunktion ist vorteilhaft, aber für die erfindungsgemäße Ausgestaltung nicht wesentlich.

Wie beispielsweise aus Figur 2B ersichtlich, ist der Hubkolben 16 derart ausgebildet, dass er den Gehäuseinnenraum 52 in die erste Unterdruckkammer 68, eine zweite Unterdruckkammer 76 und die vorstehend erwähnte (Über-)Druckkammer 62 unterteilt ist, wobei die Druckkammer 62 im Beispiel zwischen erster Unterdruckkammer 68 und zweiter Unterdruckkammer 76 angeordnet ist. Die Kammern 62, 68, 76 sind dabei durch Veränderung einer Verschiebestellung des Hubkolbens 16 entlang der Hubachse 20 in ihrer Größe veränderbar.

Im konkreten Beispiel trennt der Hubkolben 16 mittels einer zweiten Dichteinrichtung 78 einen Bereich des ersten Gehäuseinnenraums 52 ab, welcher die erste Unterdruckkammer 68 bildet. Die vorstehend erwähnte radiale Auskragung 58 trennt wiederum einen in Ausfahrrichtung 22 dahinter angeordneten Abschnitt des Gehäuseinnenraums 52 in die Druckkammer 62 und die zweite Unterdruckkammer 76. Zur Abdichtung der Überdruckkammer 62 gegenüber der zweiten Unterdruckkammer 76 ist eine dritte Dichteinrichtung 80, bspw. in Form eines O-Rings, vorgesehen.

Die erste Unterdruckkammer 68 und die zweite Unterdruckkammer 76 sind über den Unterdruckkanal 36 miteinander strömungsverbunden, sodass die zweite Unterdruckkammer 76 über die erste Unterdruckkammer 68 mit Unterdruck versorgbar ist. In der ersten Unterdruckkammer 68 und in der zweiten Unterdruckkammer 76 herrscht insofern insbesondere stets der gleiche Druck. Durch den Unterdruckkanal 36 kann insofern die Druckkammer 62 überbrückt werden.

Wird die Druckkammer 62 zumindest kurzzeitig mit Druckluft beaufschlagt, wirkt die Druckluft auf den Hubkolben 16, insbesondere die radiale Auskragung 58, sodass der Hubkolben 16 entgegen der Federbeaufschlagung durch die Druckfeder 56 in Ausfahrrichtung 22 bewegt wird und somit wie vorstehend beschrieben die Kammeröffnung 70 geöffnet wird. In Folge dessen wird Unterdruck in die erste Unterdruckkammer 68 und schließlich über den Unterdruckkanal 36 in die zweite Unterdruckkammer 76 (und weiter in den Sauggreifer 28) geleitet.

Die Unterdruckkammern 68, 76 und der Hubkolben 16 sind dabei derart bemessen, dass durch den in den Unterdruckkammern 68, 76 dann vorliegenden Unterdruck eine in Ausfahrrichtung 22 wirkende Kraft auf den Hubkolben 16 ausgeübt wird. Im Beispiel ist dies dadurch realisiert, dass der Hubkolben 16 erste Flächenabschnitte 82 aufweist, welche derart orientiert sind, dass durch Einwirken des in den Unterdruckkammern 68, 76 vorherrschenden Unterdrucks auf die ersten Flächenabschnitte 82 eine in Ausfahrrichtung 22 wirkende Kraft auf den Hubkolben 16 ausgeübt wird. Im Beispiel sind solche erste Flächenabschnitte 82 beispielsweise durch die in Ausfahrrichtung 22 orientierte Stirnfläche 57 der radialen Auskragung 58 gebildet, welche die zweite Unterdruckkammer 76 begrenzt.

Außerdem sind zweite Flächenabschnitte 84 vorgesehen, welche derart orientiert sind, dass durch Einwirken des in den Unterdruckkammern 68, 76 vorherrschenden Unterdrucks auf die zweiten Flächenabschnitte 84 eine in Einfahrrichtung 24 wirkende Kraft auf den Hubkolben 16 ausgeübt wird. Im Beispiel sind solche zweite Flächenabschnitte 84 beispielsweise durch die axialen Endflächen des Hubkolbens 16 gebildet, welche die erste Unterdruckkammer 68 begrenzen (vgl. Figur 2B).

Eine Summe aller ersten Flächenabschnitte 82 ist dabei größer als eine Summe aller zweiten Flächenabschnitte 84, sodass netto eine Kraft in Ausfahrrichtung 22 auf den Hubkolben 16 wirkt. Diese Kraft ist insofern einer Kraft infolge der Beaufschlagung mittels Druckluft überlagert.

Um eine Leckage von Unterdruck zu verhindern, sind im Beispiel optionale weitere Dichteinrichtungen 86 vorgesehen, welche den Hubkolben 16 gegenüber dem Gehäuse 20 abdichten.

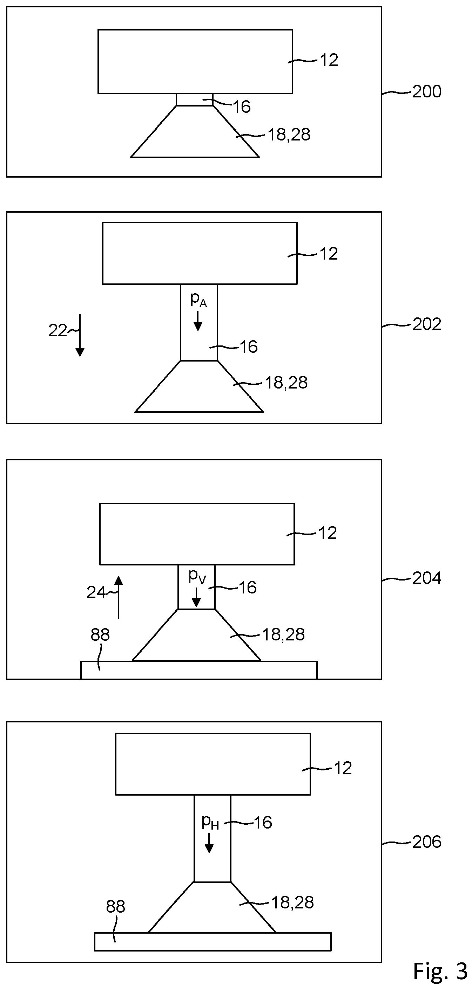

Im Folgenden wird unter Bezugnahme auf die Figur 3 eine beispielhafte Ausgestaltung eines Verfahrens zum Greifen eines Gegenstands 88 mittels einer vorstehend beschriebenen Greifvorrichtung 10 erläutert, wobei vereinfacht nur eine Greifeinheit 14 betrachtet wird. Das Verfahren kann aber auch mit mehreren Greifeinheiten 14 entsprechend durchgeführt werden.

In einem ersten Schritt (Block 200 in Figur 3), wird zunächst die Greifvorrichtung 10 bereitgestellt. Block 200 zeigt dabei die Greifvorrichtung 10 in einer Ausgangskonfiguration, in welcher sich der Hubkolben 16, bspw. aufgrund der vorstehend beschriebenen Federbeaufschlagung, in der eingefahrenen Konfiguration befindet. In dieser eingefahrenen Konfiguration ist vorzugsweise eine Unterdruckversorgung des Sauggreifers 28 durch die Absperreinrichtung 42 (erste Dichteinrichtung 72) zunächst abgesperrt.

In einem weiteren Schritt (Block 202 in Figur 3), wird sodann die Druckkammer 62 (und somit der Hubkolben 16) mit Druckluft bei einem p_{A} Ausfahrdruck beaufschlagt, sodass dieser aus der eingefahrenen Konfiguration in Ausfahrrichtung 22 bewegt wird. Wie vorstehend erwähnt, wird durch das Ausfahren die Absperreinrichtung 42 geöffnet (die Dichteinrichtung 72 von der Kammeröffnung 70 abgehoben), sodass nun Unterdruck über das Unterdruckverteilersystem 38 in die erste Unterdruckkammer 68 und von dort aus in den Unterdruckkanal 36 und weiter zu dem Sauggreifer 28 geleitet wird.

Der Ausfahrdruck ist dabei vorzugsweise derart gewählt, dass der Hubkolben 16 (entgegen der Federbeaufschlagung) in die ausgefahrene Konfiguration überführt wird. Beispielsweise kann die Druckkammer 62 mit Druckluft bei 5 bar beaufschlagt sein.

Sodann wird die Greifvorrichtung 10 mit dem Greifer 18 auf den zu greifenden Gegenstand 88 aufgesetzt (Block 204 in Figur 3).

Vor dem Aufsetzen, spätestens aber im Moment des Aufsetzens, wird der Druck der Druckluft von dem Ausfahrdruck p_{A} auf einen Voreinstelldruck p_{H} reduziert, bspw. von 5 bar auf 0-2 bar.

Wie vorstehend beschrieben, ermöglicht dies, dass der Hubkolben 16 beim Aufsetzen in gewissem Umfang in Einfahrrichtung 24 nachgeben kann ("Einfedern" des Hubkolbens 16) und so einerseits eine Beschädigung des Gegenstands 88 oder der Greifvorrichtung 10 verhindert werden kann und andererseits ein zuverlässiges Greifen (insbesondere zuverlässiges Abdichten des Sauggreifers 28) ermöglicht wird, da mögliche Unebenheiten an der Oberfläche des Gegenstands 88 durch die Hubbewegung ausgeglichen werden können.

Wie in Block 204 dargestellt, wird die Greifvorrichtung 10 vorzugsweise aktiv derart aufgesetzt, dass der Hubkolben zumindest abschnittsweise in das Greifeinheitengehäuse 44 in Einfahrrichtung 24 eingeschoben wird.

Ist der Gegenstand 88 gegriffen, bspw. durch den Sauggreifer 28 angesaugt, wird sodann in einem weiteren Schritt (Block 206 in Figur 3), der Druck der Druckluft und somit ein auf den Hubkolben 16 wirkender Druck auf einen Hauptdruck p_{H} derart erhöht, dass der Hubkolben 16 in die ausgefahrene Konfiguration (Endstellung) überführt und somit fixiert wird. Der Hauptdruck p_{H} kann insbesondere dem Ausfahrdruck p_{A} entsprechen, bspw. 5 bar.

Wie vorstehend erwähnt, ist es auch denkbar, dass vor dem Beaufschlagen der Druckkammer 62 bzw. des Hubkolbens 16 mit dem Hauptdruck p_{H} die Greifvorrichtung 10 und somit der Gegenstand 28 angehoben wird, sodass der Hubkolben 16 bereits durch die Gewichtskraft des Gegenstands 88 entgegen der Federbeaufschlagung in die ausgefahrene Konfiguration überführt wird.

## Patentansprüche

1. Verfahren zum Handhaben eines Gegenstands (88) mittels einer Greifvorrichtung (10), insbesondere Sauggreifvorrichtung, umfassend
einen Greifergrundkörper (12) und
wenigstens eine an dem Greifergrundkörper gehalterte Greifeinheit (14), umfassend einen Hubkolben (16) und einen mit dem Hubkolben (16) bewegungsgekoppelten Greifer (18), insbesondere Sauggreifer (28), zum Greifen des Gegenstands (88), wobei der Hubkolben (16) entlang einer Hubachse (20) zwischen einer axial eingefahrenen Konfiguration und einer axial ausgefahrenen Konfiguration in einer Ausfahrrichtung (22) und in einer zu der Ausfahrrichtung entgegengesetzten Einfahrrichtung (24) relativ zu dem Greifergrundkörper (12) verstellbar ist, wobei der Hubkolben (16) durch Beaufschlagen mit Druckluft in Ausfahrrichtung (22) ausfahrbar ist,
das Verfahren umfassend:
- Beaufschlagen des Hubkolbens (16) mit einem Ausfahrdruck, sodass der Hubkolben (16) ausgehend von der eingefahrenen Konfiguration in Ausfahrrichtung (22) ausgefahren wird;
- Aufsetzen des mit dem ausgefahrenen Hubkolben (16) bewegungsgekoppelten Greifers (18) auf den zu greifenden Gegenstand (88);
- Greifen des Gegenstands (88) mit dem Greifer (18), insbesondere Ansaugen des Gegenstands (88) mit dem Sauggreifer (28),
**dadurch gekennzeichnet, dass**
der Hubkolben (16) beim Aufsetzen des Greifers (18) mit einem Voreinstelldruck beaufschlagt wird und nach dem Aufsetzen, insbesondere nach dem Greifen, mit einem Hauptdruck beaufschlagt wird, wobei der Voreinstelldruck geringer ist als der Hauptdruck.

2. Verfahren nach Anspruch 1, wobei der Hauptdruck derart gewählt ist, dass der Hubkolben (16) durch die Beaufschlagung mit dem Hauptdruck in die ausgefahrene Konfiguration überführt und/oder in der ausgefahrenen Konfiguration gehalten wird.

3. Verfahren nach Anspruch 1 oder 2, wobei der Voreinstelldruck maximal halb so groß ist wie der Hauptdruck.

4. Verfahren nach einem der vorherigen Ansprüche, wobei der Voreinstelldruck dem Umgebungsdruck entspricht.

5. Verfahren nach einem der vorherigen Ansprüche, wobei der Voreinstelldruck zwischen 0 und 2 bar beträgt und/oder wobei der Hauptdruck zwischen 4 und 6 bar, insbesondere zwischen 4,5 und 5,5 bar, beträgt.

6. Verfahren nach einem der vorherigen Ansprüche, wobei der Hubkolben (16) in Einfahrrichtung (24), insbesondere in die eingefahrene Konfiguration, federbeaufschlagt ist, wobei der Voreinstelldruck derart gewählt ist, dass der Hubkolben (16) bei freiem Ausfahren - entgegen der Federbeaufschlagung - in die ausgefahrene Konfiguration oder in eine Zwischenstellung zwischen der eingefahrenen Konfiguration und der ausgefahrenen Konfiguration überführt wird.

7. Verfahren nach einem der vorherigen Ansprüche, wobei der Ausfahrdruck größer ist als der Voreinstelldruck, insbesondere dem Hauptdruck entspricht.

8. Verfahren nach einem der vorherigen Ansprüche, wobei das Aufsetzen derart erfolgt, dass der Hubkolben (16) beim Aufsetzen - entgegen der Beaufschlagung durch den Voreinstelldruck - in Einfahrrichtung (24) verlagert wird.

9. Verfahren nach einem der vorherigen Ansprüche, wobei eine Sensoreinrichtung zum Überwachen eines Greifzustands des Greifers (18) vorgesehen ist, wobei mittels der Sensoreinrichtung ein Greifzustand des Greifers überwacht wird und in Abhängigkeit eines Ausgangssignals der Sensoreinrichtung der auf den Hubkolben wirkende Druck verändert wird, insbesondere bei Detektion eines Greifens eines Gegenstands durch den Greifer (18) der auf den Hubkolben (16) wirkende Druck von dem Voreinstelldruck auf den Hauptdruck erhöht wird.

10. Verfahren nach einem der vorherigen Ansprüche, wobei der Greifer (18) als Sauggreifer (28) ausgebildet ist, welcher einen durch eine Saugöffnung (32) offenen Saugraum (34) begrenzt, wobei außerdem eine Sensoreinrichtung zum Überwachen eines in dem Saugraum (34) vorherrschenden Unterdrucks vorgesehen ist, wobei während des Aufsetzens der in dem Saugraum (34) vorherrschende Unterdruck mittels der Sensoreinrichtung überwacht wird, wobei bei Über- oder Unterschreiten eines Druck-Schwellwertes der auf den Hubkolben wirkende Druck von dem Voreinstelldruck auf den Hauptdruck erhöht wird.

11. Handhabungsvorrichtung zum Ausführen eines Verfahrens nach einem der vorherigen Ansprüche, umfassend
- eine Greifvorrichtung (10), umfassend einen Greifergrundkörper (12) und wenigstens eine an dem Greifergrundkörper gehalterte Greifeinheit (14), umfassend einen Hubkolben (16) und einen mit dem Hubkolben (16) bewegungsgekoppelten Greifer (18) zum Greifen des Gegenstands (88), wobei der Hubkolben (16) entlang einer Hubachse (20) zwischen einer axial eingefahrenen Konfiguration und einer axial ausgefahrenen Konfiguration in einer Ausfahrrichtung (22) und in einer zu der Ausfahrrichtung entgegengesetzten Einfahrrichtung (24) relativ zu dem Greifergrundkörper (12) verstellbar ist, wobei die Greifeinheit (14) ein Greifeinheitengehäuse (44) umfasst, in welchem der Hubkolben (16) verschiebbar ist, wobei in dem Greifeinheitengehäuse (44) eine Druckkammer (62) ausgebildet ist, welche mit dem Hubkolben (16) derart fluidisch zusammenwirkt, dass durch Beaufschlagen der Druckkammer (62) mit Druckluft eine in Ausfahrrichtung (22) wirkende Kraft auf den Hubkolben (16) ausgeübt wird,
- eine Druckluftversorgungseinrichtung zur Versorgung der Druckkammer (62) mit Druckluft;
- eine Druckeinstelleinrichtung zum Einstellen eines Versorgungsdruckes der Druckluft;
- optional, einen Manipulator zum Verlagern der Greifvorrichtung (10), und
- eine Steuereinrichtung zum Ansteuern der Handhabungsvorrichtung (10), wobei die Steuereinrichtung dazu eingerichtet ist, das Verfahren nach einem der Ansprüche 1 bis 9 durchzuführen.

12. Handhabungsvorrichtung nach dem vorherigen Anspruch, wobei der Greifer (18) als Sauggreifer (28) ausgebildet ist, insbesondere wobei der Sauggreifer (28) durch den mit ihm verbundenen Hubkolben (16) hindurch mit Unterdruck versorgbar ist.

13. Handhabungsvorrichtung nach dem vorherigen Anspruch, wobei der Sauggreifer (28) einen durch eine Saugöffnung (32) offenen Saugraum (34) begrenzt, wobei außerdem eine mit der Steuereinrichtung zusammenwirkende Sensoreinrichtung zum Überwachen eines in dem Saugraum (34) vorherrschenden Unterdrucks vorgesehen ist, wobei die Steuereinrichtung dazu eingerichtet ist, die Sensoreinrichtung derart anzusteuern, dass diese während des Aufsetzens des Sauggreifers (28) auf den zu greifenden Gegenstand (88) den in dem Saugraum (34) vorherrschenden Unterdruck überwacht, wobei die Steuereinrichtung außerdem dazu eingerichtet ist, bei Über- oder Unterschreiten eines Druck-Schwellwertes in dem Saugraum, die Druckeinstelleinrichtung derart anzusteuern, dass diese den auf die Druckkammer (62) wirkenden Druck von dem Voreinstelldruck auf den Hauptdruck erhöht.

14. Handhabungsvorrichtung nach einem der Ansprüche 12 oder 13, wobei die Greifvorrichtung (10), insbesondere an dem Greifergrundkörper (12), einen Unterdruckanschluss (40) zum Anschluss an eine Unterdruckversorgungseinrichtung aufweist, wobei die Greifeinheit derart ausgebildet ist, dass in der ausgefahrenen Konfiguration des Hubkolbens (16) eine Strömungsverbindung zwischen dem Unterdruckanschluss (40) und dem Sauggreifer (28) hergestellt ist und in der eingefahrenen Konfiguration des Hubkolbens (16) diese Strömungsverbindung abgesperrt ist.

## Claims

1. Method for handling an object (88) by means of a gripping apparatus (10), in particular a vacuum gripping apparatus, comprising
a gripper main body (12), and
at least one gripping unit (14) held on the gripper main body, the gripping unit comprising a piston (16) and a gripper (18), in particular a vacuum gripper (28), that is motion-coupled to the piston (16) for gripping the object (88), the piston (16) being displaceable relative to the gripper main body (12) along a stroke axis (20) between an axially retracted configuration and an axially extended configuration in an extension direction (22) and in a retraction direction (24) which is opposite to the extension direction, the piston (16) being extendable in the extension direction (22) by the application of compressed air,
the method comprising:
- applying an extension pressure to the piston (16) so that the piston (16) is extended in the extension direction (22) starting from the retracted configuration;
- placing the gripper (18) that is motion-coupled to the extended piston (16) onto the object (88) to be gripped;
- gripping the object (88) using the gripper (18), in particular suctioning the object (88) using the vacuum gripper (28),
**characterized in that**
the piston (16) is subjected to a presetting pressure when the gripper (18) the gripper is placed and is subjected to a main pressure after placement, in particular after gripping, the presetting pressure being lower than the main pressure.

2. Method according to claim 1, wherein the main pressure is selected such that the piston (16) is transferred into the extended configuration and/or held in the extended configuration by the application of the main pressure.

3. Method according to claim 1 or claim 2, wherein the presetting pressure is at most half as great as the main pressure.

4. Method according to any of the preceding claims, wherein the presetting pressure corresponds to the ambient pressure.

5. Method according to any of the preceding claims, wherein the presetting pressure is between 0 and 2 bar and/or wherein the main pressure is between 4 and 6 bar, in particular between 4.5 and 5.5 bar.

6. Method according to any of the preceding claims, wherein the piston (16) is spring-loaded in the retraction direction (24), in particular into the retracted configuration, wherein the presetting pressure is selected such that, when freely extended, counter to the spring load, the piston (16) is transferred into the extended configuration or into an intermediate position between the retracted configuration and the extended configuration.

7. Method according to any of the preceding claims, wherein the extension pressure is greater than the presetting pressure, in particular corresponds to the main pressure.

8. Method according to any of the preceding claims, wherein the placement is carried out such that the piston (16) is displaced in the retraction direction (24) during placement, counter to the application of the presetting pressure.

9. Method according to any of the preceding claims, wherein a sensor device is provided for monitoring a gripping state of the gripper (18), wherein a gripping state of the gripper is monitored by means of the sensor device, and the pressure acting upon the piston is changed depending on an output signal of the sensor device, in particular the pressure acting upon the piston (16) is increased from the presetting pressure to the main pressure upon detection of the gripping of an object by the gripper (18).

10. Method according to any of the preceding claims, wherein the gripper (18) is in the form of a vacuum gripper (28) which delimits a vacuum chamber (34) that is open by means of a vacuum opening (32), wherein a sensor device is also provided for monitoring a negative pressure prevailing in the vacuum chamber (34), wherein, during the placement, the negative pressure prevailing in the vacuum chamber (34) is monitored by means of the sensor device, wherein, when a pressure threshold value is exceeded or not met, the pressure acting upon the piston is increased from the presetting pressure to the main pressure.

11. Handling apparatus for carrying out a method according to any of the preceding claims, comprising
- a gripping apparatus (10) comprising a gripper main body (12) and at least one gripping unit (14) held on the gripper main body, the gripping unit comprising a piston (16) and a gripper (18) that is motion-coupled to the piston (16) for gripping the object (88), wherein the piston (16) is displaceable relative to the gripper main body (12) along a stroke axis (20) between an axially retracted configuration and an axially extended configuration in an extension direction (22) and in a retraction direction (24) which is opposite to the extension direction, wherein the gripping unit (14) comprises a gripping unit housing (44) in which the piston (16) is displaceable, wherein a pressure chamber (62) is formed in the gripping unit housing (44), which fluidically interacts with the piston (16) such that, by the application of compressed air to the pressure chamber (62), a force acting in the extension direction (22) is exerted on the piston (16),
- a compressed-air supply device for supplying the pressure chamber (62) with compressed air;
- a pressure adjustment device for adjusting a supply pressure of the compressed air;
- optionally, a manipulator for displacing the gripping apparatus (10), and
- a control device for controlling the handling apparatus (10), wherein the control device is configured to carry out the method according to any of claims 1 to 9.

12. Handling apparatus according to the preceding claim, wherein the gripper (18) is in the form of a vacuum gripper (28), in particular wherein the vacuum gripper (28) can be supplied with negative pressure via the piston (16) connected thereto.

13. Handling apparatus according to the preceding claim, wherein the vacuum gripper (28) delimits a vacuum chamber (34) that is open by means of a vacuum opening (32), wherein a sensor device that interacts with the control device is also provided for monitoring a negative pressure prevailing in the vacuum chamber (34), wherein the control device is configured to actuate the sensor device such that it monitors the negative pressure prevailing in the vacuum chamber (34) during the placement of the vacuum gripper (28) on the object (88) to be gripped, wherein the control device is also configured, when a pressure threshold value in the vacuum chamber is exceeded or not met, to actuate the pressure adjustment device such that it increases the pressure acting upon the pressure chamber (62) from the presetting pressure to the main pressure.

14. Handling apparatus according to any of claims 12 or 13, wherein the gripping apparatus (10) has, in particular on the gripper main body (12), a vacuum connection (40) for connection to a negative pressure supply device, wherein the gripping unit is designed such that, in the extended configuration of the piston (16), a flow connection is established between the vacuum connection (40) and the vacuum gripper (28), and, in the retracted configuration of the piston (16), this flow connection is shut off.

## Revendications

1. Procédé pour la manipulation d'un objet (88) au moyen d'un dispositif de préhension (10), en particulier un dispositif de préhension par aspiration, comprenant
un corps de base de préhenseur (12), et
au moins une unité de préhension (14) maintenue sur le corps de base de préhenseur, comprenant un piston de levage (16) et un préhenseur (18) accouplé en déplacement avec le piston de levage (16), en particulier un préhenseur à aspiration (28), pour la préhension de l'objet (88), dans lequel le piston de levage (16) peut être réglé le long d'un axe de levage (20) entre une configuration rétractée axialement et une configuration déployée axialement dans une direction de déploiement (22) et dans une direction de rétraction (24) opposée à la direction de déploiement par rapport au corps de base de préhenseur (12), dans lequel le piston de levage (16) peut être déployé dans la direction de déploiement (22) avec une sollicitation par air comprimé,
le procédé comprenant:
- la sollicitation du piston de levage (16) par une pression de déploiement de sorte que le piston de levage (16) est déployé dans la direction de déploiement (22) à partir de la configuration rétractée;
- la mise en place du préhenseur (18), accouplé en déplacement avec le piston de levage (16) déployé, sur l'objet (88) à saisir;
- la préhension de l'objet (88) avec le préhenseur (18), en particulier l'aspiration de l'objet (88) avec le préhenseur à aspiration (28),
**caractérisé en ce que**
le piston de levage (16) est sollicité par une pression de préréglage lors de la mise en place du préhenseur (18) et est sollicité par une pression principale après la mise en place, en particulier après la préhension, dans lequel la pression de préréglage est inférieure à la pression principale.

2. Procédé selon la revendication 1, dans lequel la pression principale est choisie de telle sorte que le piston de levage (16) est amené dans la configuration déployée et/ou est maintenu dans la configuration déployée par la sollicitation par pression principale.

3. Procédé selon la revendication 1 ou 2, dans lequel la pression de préréglage est au maximum deux fois plus faible que la pression principale.

4. Procédé selon l'une des revendications précédentes, dans lequel la pression de préréglage correspond à la pression ambiante.

5. Procédé selon l'une des revendications précédentes, dans lequel la pression de préréglage est comprise entre 0 et 2 bar et/ou dans lequel la pression principale est comprise entre 4 et 6 bar, en particulier entre 4,5 et 5,5 bar.

6. Procédé selon l'une des revendications précédentes, dans lequel le piston de levage (16) est sollicité par une force de ressort dans la direction de rétraction (24), en particulier dans la configuration rétractée, dans lequel la pression de préréglage est choisie de telle sorte que le piston de levage (16), lors d'un déploiement libre, à l'encontre de la sollicitation par une force de ressort, est amené dans la configuration déployée ou dans une position intermédiaire entre la configuration rétractée et la configuration déployée.

7. Procédé selon l'une des revendications précédentes, dans lequel la pression de déploiement est supérieure à la pression de préréglage, en particulier correspond à la pression principale.

8. Procédé selon l'une des revendications précédentes, dans lequel la mise en place est effectuée de telle sorte que le piston de levage (16) est déplacé dans la direction de rétraction (24) lors de la mise en place, à l'encontre de la sollicitation par pression de préréglage.

9. Procédé selon l'une des revendications précédentes, dans lequel un appareil de détection est prévu pour surveiller un état de préhension du préhenseur (18), dans lequel un état de préhension du préhenseur est surveillé au moyen de l'appareil de détection et la pression agissant sur le piston de levage est modifiée en fonction d'un signal de sortie de l'appareil de détection, en particulier la pression agissant sur le piston de levage (16) est augmentée de la pression de préréglage à la pression principale lors d'une détection d'une préhension d'un objet par le préhenseur (18).

10. Procédé selon l'une des revendications précédentes, dans lequel le préhenseur (18) est réalisé sous forme de préhenseur à aspiration (28) qui délimite un espace d'aspiration (34) ouvert par une ouverture d'aspiration (32), dans lequel un appareil de détection est en outre prévu pour surveiller une dépression régnant dans l'espace d'aspiration (34), dans lequel, pendant la mise en place, la dépression régnant dans l'espace d'aspiration (34) est surveillée au moyen de l'appareil de détection, dans lequel, en cas de dépassement vers le haut ou vers le bas d'une valeur seuil de pression, la pression agissant sur le piston de levage est augmentée de la pression de préréglage à la pression principale.

11. Dispositif de manipulation pour la mise en œuvre d'un procédé selon l'une des revendications précédentes, comprenant
- un dispositif de préhension (10), comprenant un corps de base de préhenseur (12) et au moins une unité de préhension (14) maintenue sur le corps de base de préhenseur, comprenant un piston de levage (16) et un préhenseur (18) accouplé en déplacement avec le piston de levage (16) pour la préhension de l'objet (88), dans lequel le piston de levage (16) peut être réglé le long d'un axe de levage (20) entre une configuration rétractée axialement et une configuration déployée axialement dans une direction de déploiement (22) et dans une direction de rétraction (24) opposée à la direction de déploiement par rapport au corps de base de préhenseur (12), dans lequel l'unité de préhension (14) comprend un boîtier d'unité de préhension (44) dans lequel le piston de levage (16) peut être coulissé, dans lequel une chambre de pression (62) est réalisée dans le boîtier d'unité de préhension (44), laquelle coopère de manière fluidique avec le piston de levage (16) de telle sorte qu'en sollicitant la chambre de pression (62) par de l'air comprimé, une force agissant dans la direction de déploiement (22) est exercée sur le piston de levage (16),
- un appareil d'alimentation en air comprimé pour l'alimentation de la chambre de pression (62) en air comprimé;
- un appareil de réglage de pression pour le réglage d'une pression d'alimentation de l'air comprimé;
- éventuellement, un manipulateur pour le déplacement du dispositif de préhension (10), et
- un appareil de commande pour la commande du dispositif de manipulation (10), dans lequel l'appareil de commande est configuré pour mettre en œuvre le procédé selon l'une des revendications 1 à 9.

12. Dispositif de manipulation selon la revendication précédente, dans lequel le préhenseur (18) est réalisé sous forme de préhenseur à aspiration (28), en particulier dans lequel le préhenseur à aspiration (28) peut être alimenté en dépression à travers le piston de levage (16) qui lui est relié.

13. Dispositif de manipulation selon la revendication précédente, dans lequel le préhenseur à aspiration (28) délimite un espace d'aspiration (34) ouvert par une ouverture d'aspiration (32), dans lequel un appareil de détection coopérant avec l'appareil de commande est en outre prévu pour surveiller une dépression régnant dans l'espace d'aspiration (34), dans lequel l'appareil de commande est configuré pour commander l'appareil de détection de telle sorte que celui-ci surveille la dépression régnant dans l'espace d'aspiration (34) pendant la mise en place du préhenseur à aspiration (28) sur l'objet (88) à saisir, dans lequel l'appareil de commande est en outre configuré pour, en cas de dépassement vers le haut ou vers le bas d'une valeur seuil de pression dans l'espace d'aspiration, commander l'appareil de réglage de pression de telle sorte que celui-ci augmente la pression agissant sur la chambre de pression (62) de la pression de préréglage à la pression principale.

14. Dispositif de manipulation selon l'une des revendications 12 ou 13, dans lequel le dispositif de préhension (10) présente, en particulier sur le corps de base de préhenseur (12), un raccord de dépression (40) pour le raccordement à un appareil d'alimentation en dépression, dans lequel l'unité de préhension est réalisée de telle sorte que, dans la configuration déployée du piston de levage (16), une liaison par écoulement est établie entre le raccord de dépression (40) et le préhenseur à aspiration (28) et, dans la configuration rétractée du piston de levage (16), ladite liaison d'écoulement est bloquée.
